# EUROPEAN PATENT APPLICATION

(11) **EP 2 940 630 A1**
(43) Date of publication of application: **04.11.2015**
(21) Application number: 14305651.3
(22) Date of filing: 30.04.2014
(51) Int. Cl.: G06Q 10/02, G06Q 10/08, G06Q 30/02

(54) **Method and system for inventory availability prediction**

(71) Applicant: Hewlett-Packard Development Company, L.P., Houston, TX 77070 (US)
(72) Inventor: McCorry, Kieran, Belfast, BT9 6JP (GB); Bijaoui, Pierre, 06901 Sophia-Antipolis (FR)
(74) Representative: Delumeau, François Guy

(57) **Abstract**

Implementations of the present disclosure disclose a method and system for inventory availability prediction. According to one implementation, a request for inventory availability of a desired item is received from a subscriber. Furthermore, a predicted availability of the desired item is calculated based on inventory assessment data. In addition, an optimum purchase timing is determined based on the predicted availability of the item and then provided to the subscriber.

## Description

### Background

Throughout each year, millions of people across the world purchase goods or services over the internet. The demand and inventory for a particular good or service often fluctuates based on the time of year, rarity of an item or service, and several other factors. Many Business-to-Consumer (B2C) situations involve a transaction whereby a consumer attempts to acquire or reserve an element of the inventory provided by the business. For example, an individual may wish to secure a travel reservation (e.g., flight or train), or a ticket for an entertainment event such as a concert.

### Brief description of the drawings

The features and advantages of the present disclosure as well as additional features and advantages thereof will be more clearly understood hereinafter as a result of a detailed description of implementations when taken in conjunction with the following drawings in which:
FIG. 1 illustrates an inventory availability prediction computing system according to an example of the present disclosure.
FIG. 2 illustrates a simplified block diagram of the inventory availability prediction system according to an example implementation.
FIG. 3 illustrates a sequence diagram for implementing the inventory availability prediction system according to an example implementation.
FIG. 4 illustrates a simplified flow chart of the processing steps of a method for inventory availability prediction in accordance with an example implementation.
FIG. 5 illustrates a simplified flow chart of the processing steps for ranking remediation resources in the personalized learning system in accordance with an example implementation.

### Detailed description of the invention

The following discussion is directed to various examples. Although one or more of these examples may be discussed in detail, the implementations disclosed should not be interpreted, or otherwise used, as limiting the scope of the disclosure, including the claims. In addition, one skilled in the art will understand that the following description has broad application, and the discussion of any implementations is meant only to be an example of one implementation, and not intended to intimate that the scope of the disclosure, including the claims, is limited to that implementation. Furthermore, as used herein, the designators "A", "B" and "N" particularly with respect to the reference numerals in the drawings, indicate that a number of the particular feature so designated can be included with examples of the present disclosure. The designators can represent the same or different numbers of the particular features.

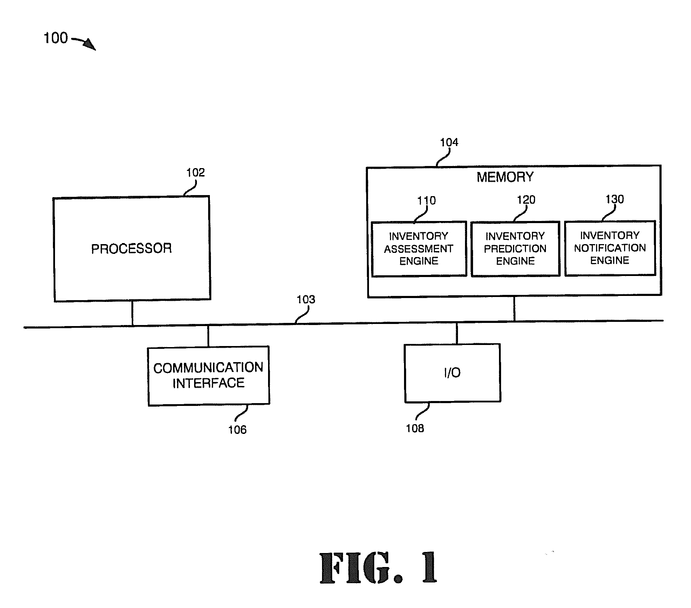

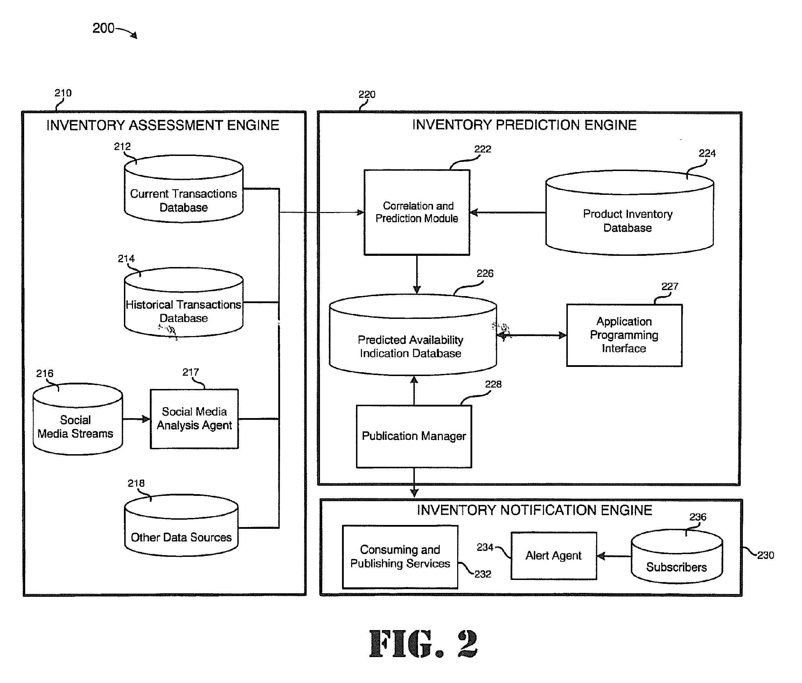

The figures herein follow a numbering convention in which the first digit or digits correspond to the drawing figure number and the remaining digits identify an element or component in the drawing. Similar elements or components between different figures may be identified by the user of similar digits. For example, 143 may reference element "43" in Figure 1, and a similar element may be referenced as 243 in Figure 2. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense.

Often times, consumers are unaware of the present inventory allocation and businesses are unable to correctly balance the inventory to meet the current demand for an item or service offering. Prior solutions to the aforementioned problem includes inventory management systems that report the current availability of an item in real-time. However, the actual inventory of an item changes daily and sometimes hourly, and these previous systems are unable to accurately project the future availability of an item - information a user may value in determining when to purchase an item. Thus, there is a need in the art for a system that operates in real-time for predictive inventory indication to consumers and businesses.

Implementations described herein provides a method and system to predict inventory availability. According to one example, the system described herein serves to indicate the extent of the inventory available at a particular time in the future, which may be determined on the basis of consumption history, rate of inventory allocation and consumption, and other factors, such as social media data analysis associated with the target item. Thus, examples of the present embodiment enables a consumer to get a feel of how soon they should complete a booking or purchase, and also provides an indication of how soon the inventory for the selected product may be exhausted.

Referring now in more detail to the drawings in which like numerals identify corresponding parts throughout the views, FIG. 1 illustrates an inventory availability prediction computing system according to an example of the present disclosure. The computer system 100 may represent a generic platform that includes components that may be in a server or another computer system. The computer system 100 may be used as a platform for the apparatus 100. The computer system 100 may execute, by a processor 102 (e.g., a single or multiple processors) or other hardware processing circuit, the methods, functions and other processes described herein.

According to one example, processor 102 implements or execute machine readable instructions performing some or all of the methods, functions and other processes described herein. Processor 102 may be, at least one central processing unit (CPU), at least one semiconductor-based microprocessor, at least one graphics processing unit (GPU), other hardware devices suitable for retrieval and execution of instructions stored in memory 104. For example, the processor 102 may include multiple cores on a chip, include multiple cores across multiple chips, multiple cores across multiple devices, or combinations thereof. Processor 102 may fetch, decode, and execute instructions to implement the approaches of the inventory availability prediction system 100. Additionally, commands and data from the processor 102 may be communicated over a communication bus 103.

The computer system 100 may also include a main memory 103, for storing machine instructions and data for the processor 102 that may reside during runtime. The memory 104 is an example of a computer or machine-readable storage medium comprising of electronic, magnetic, optical, or other physical storage device that contains or stores executable instructions. Thus, memory 104 and machine-readable storage medium may be, for example, Random Access Memory (RAM), an Electrically Erasable Programmable Read-Only Memory (EEPROM), a storage drive, a Compact Disc Read Only Memory (CD-ROM), and the like. As such, the machine-readable storage medium can be non-transitory. As described in detail herein, machine-readable storage medium 104 may be encoded with a series of executable instructions for predicting inventory availability. The memory 104 may include an inventory assessment engine, an inventory prediction engine, and an inventory notification engine including machine readable instructions residing in the memory 104 during runtime and executed by the processor 102. Each of these engines may include the modules of the system 200 shown in Figure 2.

Moreover, the computer system 100 may include an I/O device 110, such as a keyboard, a mouse, a display, etc. The computer system may further include a communication interface 106 for connecting to a network. Additionally, other known electronic components may be added or substituted in the computer system.

Implementations of the present disclosure provide a system and method that analyzes in real-time - at high frequency or on demand - the rate of exhaustion of inventory and predicts when that exhaustion will actually complete on the basis of analysis of past consumption, current consumption rate, and other factors, as will be described herein.

FIG. 2 illustrates a simplified block diagram of the inventory availability prediction system according to an example implementation. The system includes an inventory assessment engine 210, an inventory prediction engine 220, and an inventory notification engine 230.

The inventory assessment engine 210 includes a current transactions database 212, historical transactions database 214, social media streams 216, social media analysis agent 217, and other data sources 218. The current transactions database 212 contains the current transactions that affect the product inventory in real-time. For example, an external source may return a back log of ten pending transaction for a given product. The historical transactions database 214 contains data pertaining to the allocation and consumption of the specified product inventory for a given historical period (e.g., months or years). For example, database 214 may include the monthly average sales volume or rate of allocation (e.g., restocking) for a product over the course of a year or quarter. The social media analysis agent collects and processes information gathered from social media streams (e.g., Twitter, blogs, etc.) that can indicate the present and projected future demand for the product. In this way, the present system may offer a sentiment or intention analysis capability that can indicate the present demand on the inventory. In addition, other data sources 218 (e.g., weather information, holiday season) includes information that may be relevant for determining the likely consumption of the specified product.

The inventory prediction engine 220 includes a correlation and prediction module 222, product inventory database 224, predicted availability indication database 226, application programming interface (API) 227, and publication manager 228. The application programming interface 227 allows any number of external systems or applications to consume information or control the functions of the system. The product inventory database 224 defines the actual state of inventory of a product available at a given time. The correlation and prediction module 222 processes data inputs from the various database sources (e.g., 212-218) in real-time and produces outputs that indicate the predicted inventory available at specific times. According to one example, the correlation and prediction module 222 gathers data from the various sources in real-time and through analysis of this data, produces a set of outputs that indicate the likely amount of inventory available in the future for specific time periods. This output data is then stored in the predicted availability indication database 226 for use by consuming applications or services.

The predicted availability indication database 226 stores the outputs from the correlation and prediction module 222. In one implementation, the data stored in the predicted availability indication database 226 will be of a particular format, which will indicate the predicted inventory (I_{P}) of a given product (P) at any particular (n) time (tₙ). Thus, a record in the database may take the form of a tuple: *(P, I_{P}, tₙ).* Any number of such tuples may exist in the database to provide the appropriate degree of granularity over time.

The publication manager 228 controls access to the data stored in the predicted availability indication database 226. While the data stored in the predicted availability indication database 226 may be specific, consuming applications may only be provided with less granular future inventory information, which may be controlled via the publication manager 228. For example, if the actual inventory prediction is I_{P} for time tₙ, then the publication manager 228 may represent the predicted inventory to a specific consuming application as a single value from [H|M|L] where H is represents HIGH level of inventory, M represents MEDIUM level, and L represents LOW level. Other, similar representations may be used: for example, numerical ranges, time windows (e.g., within the next 24 hours) for which a proposed transaction should be completed to provide the most favorable success rate, etc. The present disclosure does not limit the way in which such information could be presented. The consuming applications may be either services supporting consumers directly (B2C) or services for intermediate service providers or aggregators (B2B).

According to one implementation, the inventory notification engine 230 includes consuming and publishing services 232, alert agent 234, and service subscribers 236. Consuming and Publishing Services 232 make the predicted availability indication information available to other systems and users, one of which might be a specific alert agent (service) 234 that expressly and proactively informs interested parties (service subscribers 236) of predicted availability indications. Service subscribers 236 may comprise of user devices, systems, or service providers that register with the host system 200.

Furthermore, examples described herein are able to allow future predicted inventory information to be made proactively available to potentially interested customers. For example, a subscribing customer that previously purchased a particular product may be proactively notified of the predicted availability of the same product at a given time (e.g., when the predicted availability is below a predetermined value). That is, implementations of the present disclosure makes predicted inventory along a time continuum easily available to requesting and non-requesting users through publication via various communication channels.

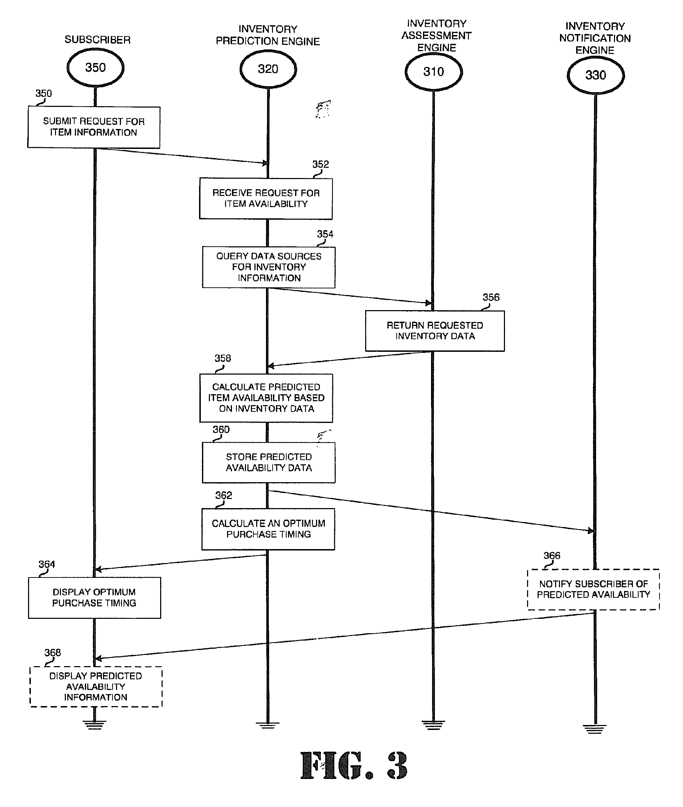

FIG. 3 illustrates a sequence diagram for implementing the inventory availability prediction system according to an example implementation.

In segment 350, a subscriber user or system submits a request for item availability information using the application programming interface. Upon receiving the request from the subscriber in segment 352, the inventory prediction engine 320 queries the inventory assessment engine and plurality of data sources in segment 354. As discussed above, the data sources may include the current transactions database, historical transactions database, social media streams, and other data sources. The inventory assessment engine 310 returns the relevant inventory data to the correlation and prediction module of the inventory prediction engine in segment 356. Based on the returned inventory data, a predicted item availability is computed in segment 358 and stored in the predicted availability indication database in segment 360. According to one example of the present disclosure, an optimum purchase timing related to the target item is also computed based on the predicted availability in segment 362. For example, if 5 items are predicted to be available in the next week with a historical consumption value of 3 items per week, the present system may compute an optimum purchase time of one week or less. The optimum purchasing may then be returned and displayed on the subscriber system or application in segment 364. Moreover, in segments 366 and 368, a subscriber that opts for predicated availability notification may receive an alert (e.g., SMS, email) via the inventory notification system 330 upon a predicted availability reaching a predetermined threshold (e.g., less than 10 tickets predicted to be available in the next week).

An example scenario of the inventory prediction availability system is described below. A consumer plans a trip from Nice, FR to Zurich, CH. There are several airlines that serve that particular route. At the time of booking, the consumer is proposed to join the Premium program that offers access to the analytical information based on historical booking; the Premium reservation may come "for free" for subscribers of frequent flyer programs above a certain level (e.g., Gold and Platinum). The consumer typically will buy a plane ticket in a dual-phase (e.g., look and book):

In the look phase, the user checks the availability of the various routes and airlines. Airlines that have an Inventory Prediction will show the Prediction as an indicator to how soon the reservation should be made. At this point, the consumer has an option to make a reservation however, without ticketing. The consumer may also decide on an alternate route or destination so as to attain a better understanding of the fares inventory. For instance, the system may indicated that economy class seats are likely to be sold out within the next 8 days, while business class seats are likely to be sold out within twenty-four hours of departure.

Using the system described herein, the consumer has the option to make a preliminary booking (holding a reservation without a firm booking) and be notified of the right moment for making the actual transaction. The notification period (e.g., complete purchase until three days before the departure) can be given immediately, or with an active notification option (user will be notified when confirmation is required before reservation is canceled).

In the booking phase, the ticket may be booked either automatically (following a reservation), or through active notification in which the consumer is incited to complete the booking according to the predicted availability. For example, the consumer will be notified (e.g., SMS, email, social media) that the preliminary booking must be confirmed within a certain amount of days or hours.

Accordingly, an airline incorporating such an inventory availability prediction system capitalizes from historical transaction data and offers value-added services to the consumer. For the consumer, the planning activity allows one to not only plan the overall trip, but also the timing of booking. For example, the consumer is notified that booking a flight on the Nice-Zurich route should be done two months in advance during high season, and only two days in advance during low season, however, at a more expensive rate.

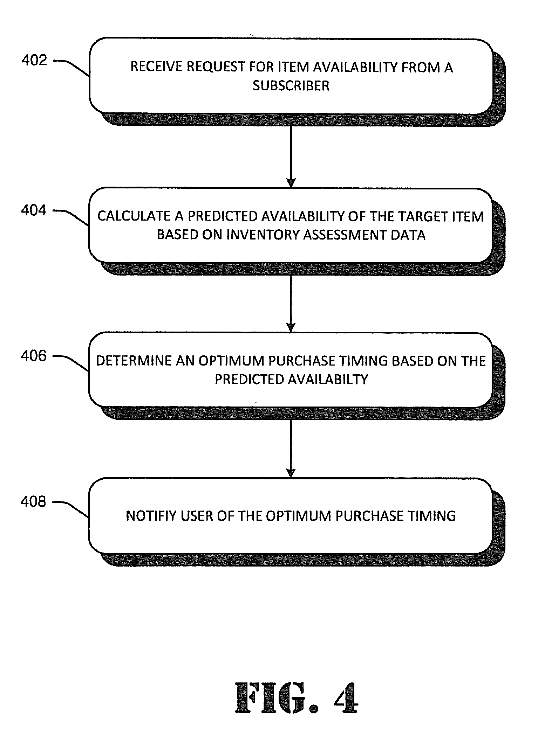

FIG. 4 illustrates a simplified flow chart of the processing steps of a method for inventory availability prediction in accordance with an example implementation. In block 402, a request for the availability of an item is received by the inventory availability prediction system. Next, in block 404, the system calculates a predicted availability of the target item based on the invention assessment data including historical purchase information, current transaction data, social media analysis, and other sources such as weather and seasonal information. In block 406, an optimum purchase timing is computed based on the predicted availability of the target item within a specific time period. For example, the system may determine that the window that can guarantee purchase of the desired item in the next month is within the next five days. In block 408, the subscriber is notified of the optimum purchase timing information.

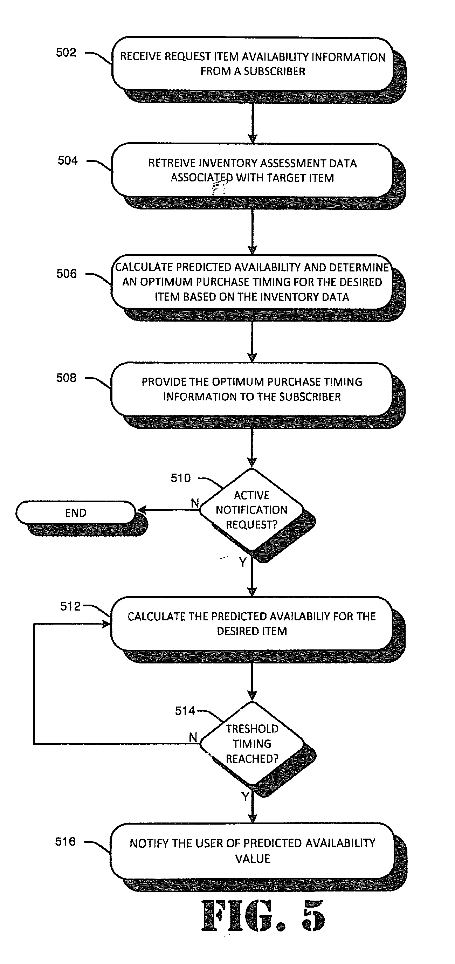

FIG. 5 illustrates a simplified flow chart of the processing steps for ranking remediation resources in the personalized learning system in accordance with an example implementation.

In block 502, a subscriber submits a request to confirm the availability of a desired item. The subscriber request may be sent via the application programming interface associated with the inventory availability prediction system described herein. Moreover, the request may be from a server, user device, or service provider.

In block 504, inventory assessment data associated with the desired item is retrieved from the inventory assessment engine. As described above, invention assessment data may comprise of historical purchase information, current transaction data, social media analysis associated with the desired item, in addition to other sources and relevant purchase information such as weather and seasonal data.

In block 506, a predicted availability and an optimum purchase timing is computed based on the predicted availability of the target item. For instance, the predicated availability of an item may be represented as *(P, I_{P}, tₙ)* indicating the predicted inventory (I_{P}) of a given product (P) at any particular (n) time (tₙ). According to one example, the optimum purchase timing is determined based on the predicted availability and predicted purchase rate. The predicted purchase rate weighs the social media analysis agent and other data sources such as high/low season, price of the item, and availability of substitutes along with any other elasticity of demand factors.

In block 508, the optimum purchase timing information is then returned to the subscriber system for review. If the subscriber elects to receive active notifications in block 510, then the predicted availability is calculated in block 512 until a threshold timing is reached as set by the user or the supplier of the product. When the actual inventory prediction reaches a threshold timing (e.g., one week later from original request or flight confirmation due soon by flight provider), then the system may notify the subscriber of the predicted inventory availability value (e.g., [H|M|L], booking confirmation due) in block 516.

Implementations of the present disclosure provide a method and system for inventory availability prediction. Moreover, many advantages are afforded by the implementations of the present examples. For instance, the present disclosure complements "look and book" activities, and helps the businesses reach a higher rate of booking after the consumer has looked through the options made available. For the consumer, there is a greater confidence in obtaining the required product by making sure that the transaction is completed before the inventory is exhausted, while also assisting the consumer in planning activities. For the business, there is increased clarity around inventory availability/consumption, provision of better information to consumers and improved insights concerning future inventory movements.

Furthermore, while the disclosure has been described with respect to particular examples, one skilled in the art will recognize that numerous modifications are possible. Moreover, not all components, features, structures, characteristics, etc. described and illustrated herein need be included in a particular example or implementation. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element. It is to be noted that, although some examples have been described in reference to particular implementations, other implementations are possible according to some examples. Additionally, the arrangement o order of elements or other features illustrated in the drawings or described herein need not be arranged in the particular way illustrated and described. Many other arrangements are possible according to some examples.

The techniques are not restricted to the particular details listed herein. Indeed, those skilled in the art having the benefit of this disclosure will appreciate that many other variations from the foregoing description and drawings may be made within the scope of the present techniques. Accordingly, it is the following claims including any amendments thereto that define the scope of the techniques.

## Claims

1. A computer-implemented method for inventory availability prediction comprising:
receiving an inventory availability request from a subscriber for a desired item;
calculating a predicted availability based on inventory assessment data;
determining an optimum purchase timing based on the predicted availability of the item; and
providing the optimum purchase timing to the subscriber.

2. The method of claim 1, further comprising:
analyzing social media data associated with the target item; and
calculating a predicted purchase rate for the item based on the analysis of social media.

3. The method of claim 2, wherein the optimum purchase timing is based on the predicted availability and predicted purchase rate of the desired item.

4. The method of claim 1, further comprising:
receiving a request for active notification of information associated with the desired item; and
notifying the user of a predicted availability upon the predicted availability reaching a predetermined threshold.

5. The method of claim 1, wherein the inventory data includes the current transaction information, historical transactional information, and the rate of inventory allocation of the item.

6. The method of claim 1, wherein the calculation of the predicted availability is performed in real-time.

7. A system for inventory availability prediction comprising:
a subscriber associated with a desired item;
an inventory assessment engine to store inventory data associated with the desired item; and
an inventory prediction engine to calculate a predicted availability of the desired item based on the inventory data and determine an optimum purchase timing based on the predicted availability, wherein the inventory prediction engine provides the optimum purchase timing to the subscriber.

8. The system of claim 7, further comprising:
an inventory notification engine to notify a subscriber of the predicted availability of the desired item.

9. The system of claim 7, wherein a predicted purchase rate of the desired item is computed based on analysis of social media information associated with the target item.

10. The system of claim 9, wherein the optimum purchase timing is determined based on the predicted availability and predicted purchase rate of the desired item.

11. The system of claim 7, wherein the inventory data includes the current transaction information, historical transactional information, and the rate of inventory allocation of the item.

12. The system of claim 7, wherein the inventory prediction engine proactively notifies subscribers of the predicted availability of an item previously purchased by said subscriber.

13. A non-transitory computer readable medium for inventory allocation prediction having programmed instructions stored thereon for causing a processor to:
receive an inventory availability request from a subscriber for a desired item;
calculate a predicted availability based on inventory assessment data;
analyzing social media data associated with the target item
calculating a predicted purchase rate for the item based on the analysis of social media
determine an optimum purchase timing based on the predicted availability and predicted purchase rate of the item; and
provide the optimum purchase timing to the subscriber.

14. The non-transitory computer readable medium of claim 13, wherein the programmed instructions stored thereon further cause the processor to:
receive a request for active notification of information associated with the desired item; and
notify the user of a predicted availability upon the predicted availability reaching a predetermined threshold.

15. The non-transitory computer readable medium of claim 14, wherein the programmed instructions stored thereon further cause the processor to:
proactively notify a subscriber of the predicted availability of an item previously purchased by said subscriber.
